# EUROPEAN PATENT APPLICATION

(11) **EP 1 317 139 A2**
(43) Date of publication of application: **04.06.2003**
(21) Application number: 02079789.0
(22) Date of filing: 18.11.2002
(51) Int. Cl.: H04N 5/335

(54) **An image sensor clock driver having efficient energy consumption**

(30) Priority: 30.11.2001 US 20307
(71) Applicant: EASTMAN KODAK COMPANY, Rochester, New York 14650 (US)
(72) Inventor: Parks, Christopher, c/o Eastman Kodak Company, Rochester, New York 14650-2201 (US)
(74) Representative: Haile, Helen Cynthia

(57) **Abstract**

An image sensor clock driver for reducing energy consumption comprises a charge-coupled device having at least two gates for receiving an electrical signal; at least first and second electrical buses each having a unique voltage; a first switch on each of the gates that connects each gate to any one of the electrical buses or to a neutral position; and a second switch to connect the two gates together for reducing power consumption by transferring charge from one gate to the other gate at a time when the first switches are in a neutral position.

## Description

The invention relates generally to the field of clock drivers for image sensors and, more particularly, to such image sensors that use complimentary clocking of the CCD gates.

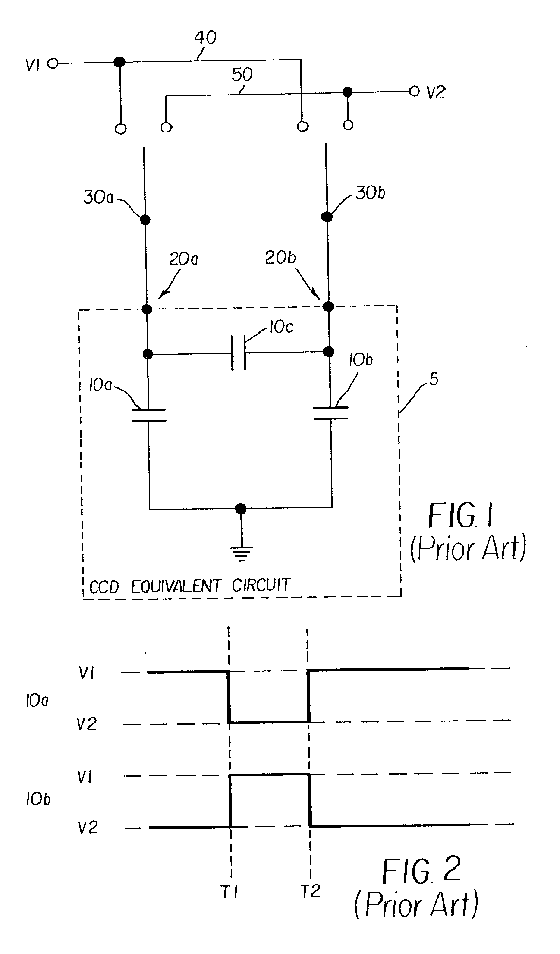

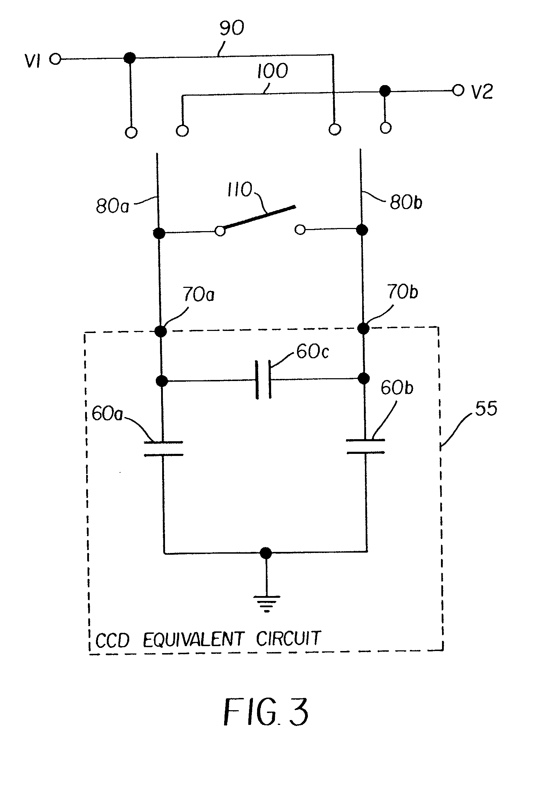

Currently, image sensors include clock drivers that drive CCDs for passing charge packets therethrough. Referring to Figs. 1 and 2, there is shown a two-phase image sensor having two gates 10 per CCD 5, each gate is schematically shown as capacitors 10a and 10b. It is instructive to note that the image sensor includes a plurality of CCDs, although only one is shown in the drawing for brevity. A cross capacitance is represented by capacitor 10c. Each CCD 10 includes a pin 20 having a switch 30 respectively attached thereto. Two buses 40 and 50 each having a unique voltage alternately clock their respective voltage to each of the gates 10 of the CCD 5. For example, and referring to Fig. 1, at the time before T1, switch 30a is connected to V1 (40) and switch 30b is connected to V2 (50). CCD gate 10a is charged to voltage V1 and gate 10b is charged to V2. At time T1, switch 30a switches from V1 to V2 and switch 30b switches from V2 to V1. Consequently, CCD gate 10a is charged to voltage V2 and gate 10b is charged to voltage V1.

Although the currently known and utilized image sensors are satisfactory, they include drawbacks. All of the energy required to charge the capacitors must come from the power supplies V1 and V2. This causes inefficient use of the energy from the power supplies.

Consequently, a need exists for an image sensor which efficiently uses the energy of the power supplies.

The present invention is directed to overcoming one or more of the problems set forth above. Briefly summarized, according to one aspect of the present invention, the invention resides in an image sensor for reducing energy consumption comprising: (a) a charge-coupled device having at least two gates for receiving an electrical signal; (b) at least first and second electrical buses each having a unique voltage; (c) a first switch on each of the gates that connects each gate to any one of the electrical buses or to a neutral position; (d) a second switch to connect the two gates together for reducing power consumption by transferring charge from one gate to the other gate at a time when the first switches are in a neutral position.

These and other aspects, objects, features and advantages of the present invention will be more clearly understood and appreciated from a review of the following detailed description of the preferred embodiments and appended claims, and by reference to the accompanying drawings.

The present invention has the following advantage of transferring a fraction of the energy from one gate to the other gate before charging the gates by the power supplies, which reduces the energy that taken from the power supplies to charge the gates.
Fig. 1 is a prior art two phase image sensor;
Fig. 2 is a timing diagram for the sensor of Fig. 1;
Fig. 3 is a two phase image sensor of the present invention; and
Fig. 4 is a timing diagram for the sensor of Fig. 3.

Referring to Fig. 3, there is shown a CCD 55 of an image sensor of the present invention. It is instructive to note that the image sensor includes a plurality of CCDs, although only one is shown in the drawing for brevity. The CCD 55 includes two gates 60 for transferring collected charge therethrough. A cross capacitance is represented by capacitor 60c. A pin 70 is electrically connected to each gate 60 of the CCD for respectively providing a contact for each gate 60. Two switches 80 (preferably implemented by transistors) are also respectively connected electrically to each pin 70 for transmitting voltage to the CCD gates 60 from power supplies. Each power supply 90 and 100 supplies a unique voltage, which is supplied to alternately to each of the gates 60.

A switch 110 (preferably implemented by a transistor) is electrically connected between the two pins 70 for transferring charge between the gates 60, as will be described in detail hereinbelow. It is instructive to note that the buses 90 and 100 are each maintained at a particular unique voltage.

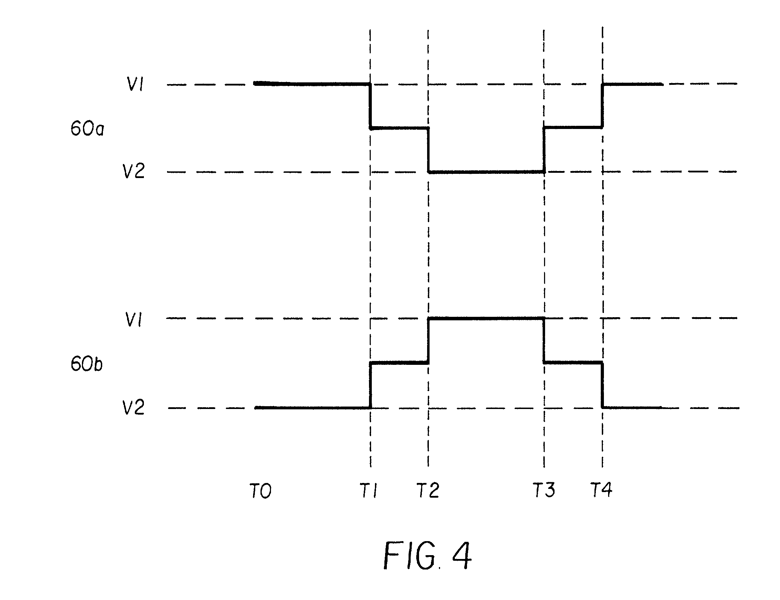

Referring to Figs. 3 and 4, the operation of the sensor is as follows. At time T0, switch 80a is connected to V1 for charging gate 60a to voltage V1, and switch 80b is connected to V2 for charging gate 60b to voltage V2. At time T1, switch 80a and switch 80b are opened (disconnected from the supplies V1 and V2), and switch 110 is closed. The voltage on gate 60a changes to an intermediate voltage between V1 and V2, and the voltage on gate 60b changes to the same intermediate voltage between V1 and V2. Then at time T2, switch 110 opens and switch 80a switches to V2 and switch 80b switches to V1. This decreases the voltage on gate 60a to V2 and increases the voltage on gate 60b to V1.

At time T3, switch 80a and switch 80b are opened (disconnected from the supplies V1 and V2), and switch 110 is closed. The voltage on gate 60a changes from V2 to an intermediate voltage between V1 and V2, and the voltage on gate 60b changes from V1 to the same intermediate voltage between V1 and V2. Then at time T4, switch 110 opens and switch 80a switches to power supply V1 and switch 80b switches to voltage V2. This increases the voltage on gate 60a to V1 and decreases the voltage on gate 60b to V2.

The present invention takes advantage of the simultaneous switching of gates 60 between two voltage levels. Since gates 70 are capacative loads, it is not necessary to change the voltages on the gates 60 by only supplying charge from the power supplies 90 and 100.

## Claims

1. An image sensor clock driver system for reducing energy consumption comprising:
(a) a charge-coupled device having at least two gates for receiving an electrical signal;
(b) at least first and second electrical buses each having a unique voltage;
(c) a first switch on each of the gates that connects each gate to any one of the electrical buses or to a neutral position; and
(d) a second switch to connect the two gates together for reducing power consumption by transferring charge from one gate to the other gate at a time when the first switches are in a neutral position.

2. The image sensor as in claim 1, wherein the first and second switches are transistors.

3. A method for reducing energy consumption in image sensors, the method comprising the steps of:
(a) providing a charge-coupled device having at least two gates for receiving an electrical signal;
(b) providing at least first and second electrical buses each having a unique voltage;
(c) providing a first switch on each of the gates that connects each gate to any one of the electrical buses or to a neutral position; and
(d) providing a second switch to connect the two gates together for reducing power consumption by transferring charge from one gate to the other gate at a time when the first switches are in a neutral position.
